# EUROPÄISCHE PATENTSCHRIFT

(11) **EP 3 158 140 B1**
(45) Veröffentlichungstag und Bekanntmachung des Hinweises auf die Patenterteilung: **28.03.2018**
(21) Anmeldenummer: 15730129.2
(22) Anmeldetag: 17.06.2015
(51) Int. Cl.: E04B 1/80, E04B 2/92

(54) **FASSADENSVSTEM MIT FEUERBESTÄNDIGEN FASSADENELEMENTEN MIT HOHER DÄMMWIRKUNG FÜR DEN FASSADENBAU BEI HOCHHÄUSERN UND VERFAHREN ZU DESSEN HERSTELLUNG**
FACADE SYSTEM WITH FIREPROOF FACADE ELEMENTS WITH HIGH INSULATION PROPERTIES FOR FACADES OF SKYSCRAPERS AND PROCESS FOR PRODUCING SUCH FACADE SYSTEM
SYSTÈME DE FAÇADE AVEC DES ÉLÉMENTS DE FAÇADE RESISTANT AU FEU ET AYANT DE HAUTES PROPRIÉTÉS ISOLANTES POUR FAÇADES DE GRATTE-CIEL ET PROCESSUS DE PRODUCTION D'UN TEL SYSTÈME DE FAÇADE

(30) Priorität: 18.06.2014 DE 202014005033 U; 18.06.2014 DE 102014009137
(43) Veröffentlichungstag der Anmeldung: 26.04.2017
(73) Patentinhaber: Evonik Degussa GmbH, 45128 Essen (DE); FKN Holding Gmbh & Co. KG, 74632 Neuenstein (DE)
(72) Erfinder: DIZIN, Ecevit, 45327 Essen (DE); GÄRTNER, Gabriele, 63454 Hanau (DE); ASBAHR, Hark-Oluf, 67161 Gönnheim (DE); RIES, Thomas, 36251 Bad Hersfeld (DE); EBERT, Franz, 74597 Stimpfach (DE); MACK, Hans-Ulrich, 74081 Heilbronn-Sontheim (DE)
(86) Internationale Anmeldenummer: PCT/EP2015/063519
(87) Internationale Veröffentlichungsnummer: WO 2015/193338

(56) Entgegenhaltungen:
- EP-B1- 1 436 471
- WO-A1-2012/041823
- DE-A1-102012 017 513

## Beschreibung

Die Erfindung betrifft ein Fassadensystem mit feuerbeständigen Fassadenelementen mit hoher Dämmwirkung für den Fassadenbau bei Hochhäusern und ein Verfahren zu dessen Herstellung. Unter dem Begriff "feuerbeständig" wird hier mindestens das Erreichen der Brandschutzklasse W-90 verstanden.

Bundesregierung und Bauherren sind Anhänger der Fassadendämmung. Doch einige der häufig verarbeiteten Materialien sind offenbar, im wahrsten Sinn des Wortes, brandgefährlich und gesundheitsschädlich. So hat ein diesbezüglicher Artikel in einem bekannten Nachrichten - Magazin jüngst für Aufsehen gesorgt. Hier wurde drastisch auf die lange nicht bekannte Gefährlichkeit von Dämmsystemen auf der Basis von Styropor und Phenolharz hingewiesen (Der Spiegel, Nr. 26, 2012, Glutheiße Seen).

Die mit den zunehmenden Anforderungen an die Gebäude - Wärmedämmung benötigten Dicken von Dämmstoffen steigern außerdem die Nachfrage nach effizienteren Materialien und Systemen zur Gebäudedämmung.

Eine mögliche Abhilfe bietet hierbei die Isolation mit mikroporösen Dämmstoffen. Ein mikroporöser Dämmstoff wird unter anderen aus pyrogener Kieselsäure, meist in Verbindung mit einem Stabilisator, hergestellt. Die Porengrößen dieser Dämmstoffe sind im Nanobereich und damit kleiner als die mittlere freie Weglänge der Luftmoleküle. Dies bewirkt unter anderem die ausgezeichneten Dämmeigenschaften gegen Wärmeverlust. Mikroporöse Kieselsäure besitzt eine extrem niedrige Wärmeleitfähigkeit, die sich insbesondere bei hohen Temperaturen nur wenig erhöht. Mikroporöse Kieselsäure besitzt eine hohe thermische Stabilität, ist nicht brennbar und ist chemisch resistent gegen Säuren, Alkalien und Abgase. Mikroporöse Kieselsäure ist frei von organischen Bindemitteln. Es ergeben sich bei der Dämmung mittels Werkstoffen aus mikroporöser Kieselsäure im Wesentlichen die folgenden Vorteile:
1. Bei geringerer Dämmstoffdicke als bei herkömmlicher Dämmung besteht eine vielfach geringere Wärmeleitung.
2. Die Lebensdauer dieses Dämm - Materials liegt bei ca.50 Jahren
3. Weiter zeigt ein Wärmeleitfähigkeit - Vergleich
   Mikroporöser Dämmstoff = 0,019 W/m² K, Polystyrolschaum = 0,04 W/m² K Glaswolle = 0,035 - 0,045 W/m² K
4. Es sind auch geringe Dämmstärken ab 1 cm möglich.

Zum Stand der Technik wird auf folgende Druckschriften verwiesen:
In der WO 2012 / 041 823 A1 ist ein mikroporöser, mit Organosilanen hydrophobierter Wärmedämmformkörper mit hydrophiler Oberfläche beschrieben. Die Zielsetzung dieses Dokuments ist es, einen mikroporösen, vorwiegend diffusionsoffenen und hydrophoben Wärmedämmformkörper mit verbesserten mechanischen Eigenschaften bereitzustellen, der es erlaubt, weitere Schichten auf wasserhaltiger Basis dauerhaft aufzubringen.
Im Anspruch 1 dieser Druckschrift wird deshalb ein mikroporöser, mit Organosilanen hydrophobierter Wärmeformkörper beansprucht, dessen Oberfläche
   a) teilweise oder vollständig fest mit einer offenporigen, hydrophilen Schicht oder
   b) teilweise fest mit einer offenporigen, hydrophilen Schicht oder
   c) teilweise fest mit einer offenporigen, hydrophilen Schicht und teilweise fest mit einer nicht offenporigen, hydrophilen Schicht verklebt ist.

Im Anspruch 2 dieses Dokuments wird ein Verfahren zur Herstellung eines derartigen Wärmedämmformkörpers beansprucht, das dadurch gekennzeichnet ist, dass in einer Kammer, in der ein Druck von weniger als Atmosphärendruck herrscht, ein solcher Körper mit einem oder mehreren dampfförmigen Orgosilanen behandelt wird.

Aus der EP 1 436 471 B1 sind Paneele mit einem Vakuumelement für Außenwandkonstruktionen bekannt, denen die Zielsetzung zugrunde liegt, praxisverwertbare, weniger empfindliche Paneele mit einem möglichst einfachen Aufbau zu schaffen, die für einen besseren Schallschutz und eine bessere Wärmedämmung sorgen.

Diese Zielsetzung wird erreicht durch einen Paneelaufbau für Wandkonstruktionen, der in Form eines Bauteils zwischen Rahmenprofilelementen anbringbar ist, umfassend mindestens ein Vakuum - Isolationspaneel und ein Dämmelement, wobei das Vakuum - Isolationspaneel und das Dämmelement zwischen einer äußeren Abdeckung und einer inneren Abdeckung angeordnet sind, dadurch gekennzeichnet, dass der Paneelaufbau weiterhin druckfeste Abstandshalter umfasst die zwischen dem mindestens einen Vakuum - Isolationspaneel und der an dem Dämmelement angrenzenden äußeren Abdeckung und / oder zwischen innerer Abdeckung und äußerer Abdeckung angeordnet und vorzugsweise mit diesen verklebt sind, und sich das Vakuum - Isolationspaneel mit seiner nach der inneren Abdeckung gerichteten Fläche näher zur inneren Abdeckung befindet als das Dämmelement mit seiner nach dieser inneren Abdeckung gerichteten Fläche. Im Wesentlichen ist hier die Schichtung eines Dämmelements und eines Vakuum-Isolationspaneels unter Verwendung von Abstandshaltern beansprucht. Aus der DE 20 2009 014 215 U1 ist eine Paneelkonstruktion bekannt, mit einem Tragelement zur Halterung mindestens eines Paneels, einem mit dem Tragelement verbundenen Halteprofil zur Befestigung des mindestens einen Paneels am Tragelement und einem an der Innenseite des Paneels angeordneten Vakuumpaneel, wobei zwischen einer zum Tragelement gewandten Seitenfläche des Vakuumpaneels und dem Tragelement ein Dichtelement zur randseitigen Abdichtung des Vakuumpaneels angeordnet ist.

Der vorliegenden Erfindung liegt die Aufgabe zugrunde, ein feuerbeständiges Dämmelement für den Fassadenbau zum Einbau bei Hochhäusern, bei Neubauten und bei Renovierungen, und ein Verfahren zu dessen Herstellung bereit zu stellen.

Diese Aufgabe wird durch die Vorrichtung nach Anspruch 1, bzw. das Verfahren nach Anspruch 5 gelöst.

Die erfindungsgemäße Vorrichtung wird im Folgenden näher beschrieben. Es zeigen im Einzelnen:
Fig.1: eine Vorderansicht des erfindungsgemäßen Fassadenelements
Fig.2: einen Querschnitt des Fassadenelements
Fig.3: eine Detailansicht eines Klemmelements 4
Fig.4: eine Detailansicht eines Distanz - und Halteelements 14

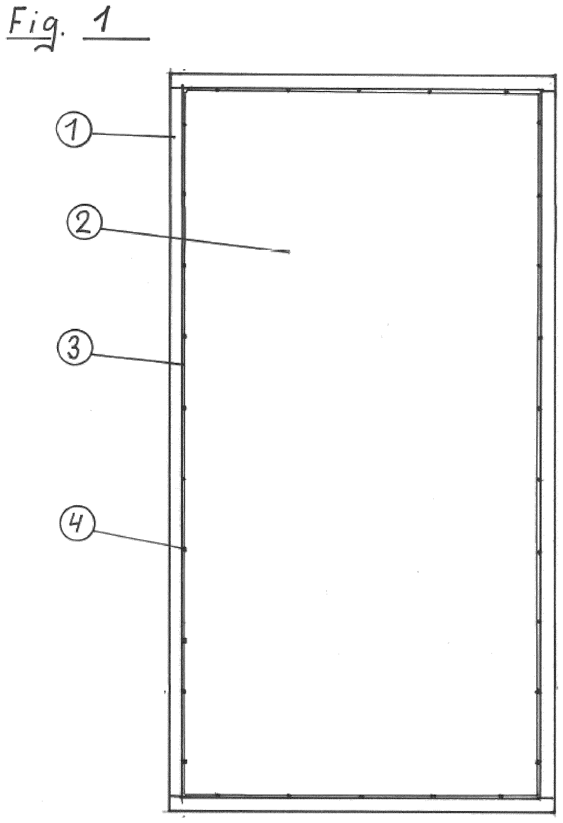

Die Fig.1: zeigt eine Vorderansicht des erfindungsgemäßen Fassadenelements. Diese Darstellung zeigt im Wesentlichen stilisiert die äußere Deckplatte 2 eines erfindungsgemäßen Fassadenelements mit einem äußeren Rahmenabschluss 1 und einer Außendichtung 3 und einem von mehreren, mit 4 bezeichneten, Klemmelement. Die Anzahl der verwendeten Klemmelemente richtet sich hierbei nach den Außenabmessungen des jeweiligen Fassadenelements.

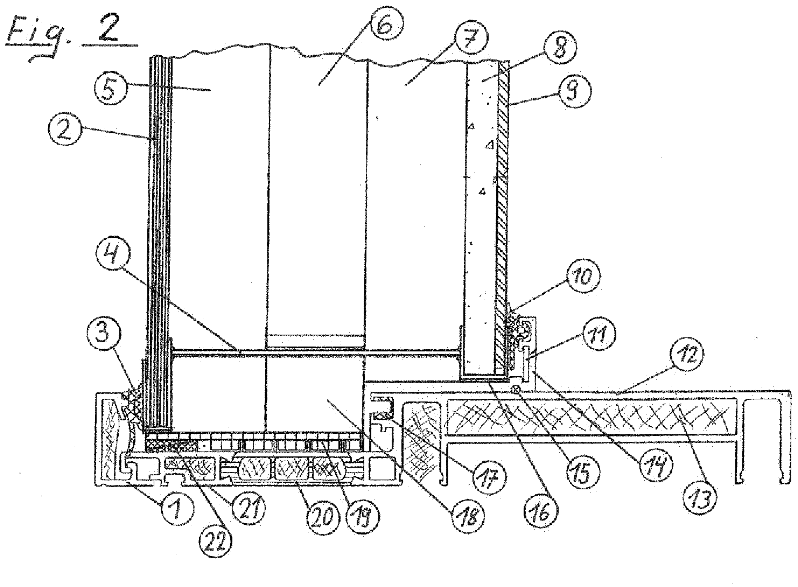

Die Fig.2: zeigt einen Querschnitt des Fassadenelements im Bereich einer Ecke der für die Befestigung der jeweiligen Fassade verwendeten Tragekonstruktion. Hier ist in der linken unteren Ecke wieder der äußere Rahmenabschluss 1 zu erkennen der in Verbindung mit einem äußeren Rahmenelement 21 steht. Als linke Begrenzungsfläche ist in dieser Darstellung die äußere Deckplatte 2, hierbeispielsweise in der Form einer Glasplatte, ausgebildet als ESG (Einscheiben - Sicherheitsglas) zu erkennen. Es ist ersichtlich, dass die äußere Deckplatte 2 aus jedem denkbaren Material bestehen kann, das die nötige mechanische Festigkeit, das tragbare Gewicht und die architektonische Akzeptanz aufweist. Es kann sich hierbei auch um mehrere hintereinander liegende Platten handeln. Das wirksame Dämmelement besteht aus einer 3 - stufigen Schichtung einer äußeren Dämmplatte 5 aus hydrophober Kieselsäure und einer inneren Dämmplatte 7 aus hydrophober Kieselsäure, wobei zwischen den beiden Dämmplatten 5 und 7 eine dritte Dämmplatte in der Form einer Vakuum - Isolierplatte 6 gelagert ist. Die Vakuum - Isolierplatte 6 besteht aus Kieselsäure die mit einer Folie umgeben und dann evakuiert wurde. Als besondere Ausgestaltung kann die Kieselsäure hydrophobiert sein und es kann die Folie aus einer Metall - beschichteten Plastikfolie bestehen. Auch Graphen kann als Folienstoff benutzt werden. Die Vakuum - Isolierplatte kann auch noch andere Stoffe enthalten, wie beispielsweise Blähton.

Die innere Begrenzung dieses 3 - stufigen Dämmelements wird von einer inneren Deckplatte 8, eventuell verziert mit einer Dekorplatte 9, gebildet. Da sich das gezeigte 3 - stufige Dämmelement in die bestehenden Systeme des Fassadenbaus einfügen soll, jedoch das bauphysikalisch gewünschte Dämmverhalten den gezeigten Dämmstoff - Aufbau erfordert, besteht die Notwendigkeit das Gesamtpaket des 3 - stufigen Dämmelements mitsamt der äußeren Deckplatte 2 und den inneren Deckplatten 8 und 9 zu einem Fassadenelement zu verbinden.

Zu diesem Zweck wird das bestehende äußere Rahmenelement 21 mittels eines Distanz - und Halteelements 14 verlängert um das gesamte 3 - stufige Dämmelement mit seinen Deckplatten 2, 8 und 9 aufnehmen zu können.

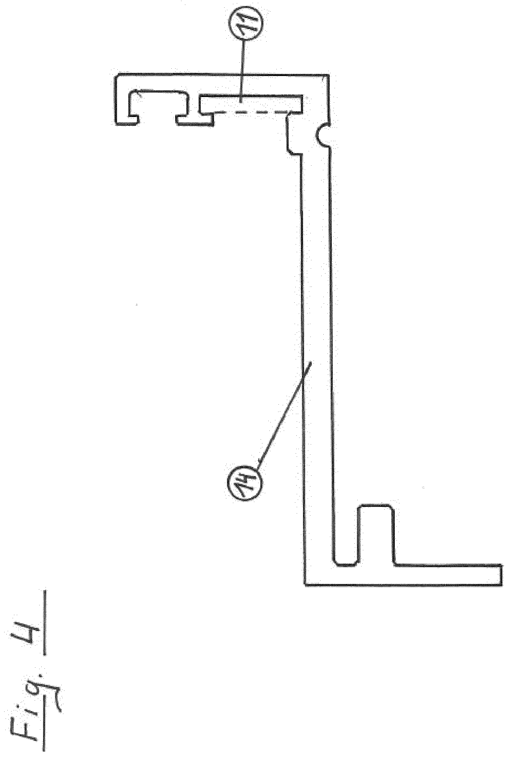

Eine Detail - Ansicht dieses Distanz - und Halteelements 14 findet sich in der Fig.4. Dieses, im Querschnitt längliche, an seinen beiden Enden jeweils von Winkelstücken ergänzte Distanz - und Halteelement 14 ist mit einer nasenförmigen Ausbuchtung in dem äußeren Rahmenelement 21 verankert. Diese nasenförmige Ausbuchtung ist in der Fig.2 im Bereich der Trennlinie zwischen der inneren Dämmplatte 7 und der Vakuum - Isolierplatte 6 zu sehen. Weiter ist diese nasenförmige Ausbuchtung an einer, sie umhüllenden, Dichtung 17 zu erkennen.

Zum Zusammenhalt eines Fassadenelements, bestehend aus dem gezeigten 3 - stufigen Dämmelement und den jeweiligen Deckplatten dienen, am Umfang verteilte, Klemmelemente 4. Diese Klemmelemente 4 umfassen auf der einen Seite die äußere Deckplatte 2 und auf der anderen Seite die inneren Deckplatten 8 und 9 und schließen somit das 3 - stufige Dämmelement ein.

Da die innenliegende Vakuum - Isolierplatte 6 von den Klemmelementen 4 nicht durchstoßen werden kann, da sonst das Vakuum verloren ginge, wird der Flächenbereich am Rand einer Vakuum Isolierplatte , der für den Durchtritt eines Klemmelements 4 benötigt wird, von einer umlaufenden feuerfesten Dichtleiste 18 eingenommen. Die Dichtleiste kann aus Promat gefertigt sein.

Die Klemmelemente 14 sind in der Hauptsache zu dem Zweck verbaut, dass im Brandfall das Fassadenelement nicht auseinander fällt und einer längeren Brandbelastung standhält. Die Distanz - und Halteelemente 14 werden im Eckbereich von einem rechtwinkeligen Eckverbinder 11 in der Gehrung fixiert. Die Verbindung zwischen dem jeweiligen bestehenden inneren Rahmenelement 12 und dem betreffenden Distanz - und Halteelement 14 wird mittels einer feuerfesten Dichtschnur 15 abgedichtet.

Die Außendichtung 3 und eine Innendichtung 10 dichten das Fassadenelement gegen den Außenbereich und den Innenbereich ab.

Zur Fixierung der äußeren Deckplatte 2 dienen die Verschiebekeile 22. Eine vergleichbare Funktion für die inneren Deckplatten 8 und 9 erfüllt die Versiegelungsleiste 16. Für den Fall, dass die innere Deckplatte 8 zum Beispiel aus Rigips besteht, kann die Versiegelungsleiste 16 den Randbereich dieser Rigipsplatte besonders schützen.

Im Randbereich der äußeren Dämmplatte 5 und der Vakuum - Isolierplatte 6 ist ein elastisches feuerfestes Zwischenlage - Element 19 als Abgrenzung zum bestehenden äußeren Rahmenelement 21 eingebaut. Hierdurch wird ein luftdichter Rasterverbund erreicht. In dem bestehenden Rahmenelement 21 ist ein thermisches Trennelement 20.integriert.

Als besondere Ausgestaltung kann es vorgesehen sein, die im Rahmensystem 12 vorhandenen Hohlräume mit einem Füllstoff, beispielsweise mit hydrophober Kieselsäure, aufzufüllen.

Das beschriebene Dämmsystem weist keine Hohlräume auf und ist deshalb gegen Schwitzwasser unempfindlich.

Da das hier beschriebene Fassadenelement sich leicht in bestehende Fassadensysteme integrieren lässt, eignet es sich auch in besonderem Maß zur Renovierung bestehender Altbauten. Die erfindungsgemäßen Fassadenelemente können nicht nur wie ein wärmedämmendes Verbundsystem auf ein massives Mauerwerk aufgesetzt werden, sondern können auch nach dem Einhängen in ein Skelett direkt die Wand eines Hauses bilden.

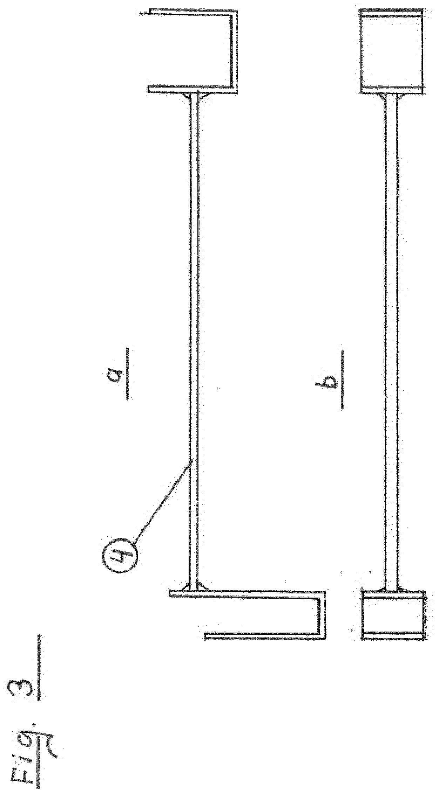

Die Fig. 3 zeigt eine Detailansicht eines Klemmelements 4. Hier sind in der Fig. 3a die Seitenansicht und in der Fig.3b die Draufsicht des Klemmelements 4 dargestellt, Das Klemmelement 4 besteht aus einem feuerfesten Stoff.

Die Fig.4: zeigt eine Detailansicht eines Distanz - und Halteelements 14. Auf der linken Seite ist hier die, schon bei der Beschreibung der Fig.2 erwähnte nasenförmige Ausbuchtung zu erkennen und auf der rechten Seite ist die Aussparung für den Einschub eines rechtwinkeligen Eckverbinders 11 zu sehen.

### Bezugszeichenliste

- 1: äußerer Rahmenabschluss
- 2: äußere Deckplatte (beispielsweise ESG)
- 3: Außendichtung
- 4: Klemmelement
- 5: äußere Dämmplatte aus hydrophober Kieselsäure
- 6: Vakuum - Isolierplatte VIP
- 7: innere Dämmplatte aus hydrophober Kieselsäure
- 8: innere Deckplatte (feuerfest)
- 9: Dekorplatte
- 10: Innendichtung
- 11: rechtwinkeliger Eckverbinder
- 12: inneres Rahmenelement
- 13: Füllstoff (beispielsweise hydrophobe Kieselsäure)
- 14: Distanz - und Halteelement
- 15: Dichtschnur (feuerfest)
- 16: Versiegelungsleiste
- 17: Dichtung für Distanz - und Halteelement 14
- 18: feuerfeste Dichtleiste
- 19: elastisches feuerfestes Zwischenlage - Element
- 20: thermisches Trennelement
- 21: äußeres Rahmenelement
- 22: Einspanneinrichtung in der Form von Verschiebekeilen

## Patentansprüche

1. Fassadensystem mit feuerbeständigen Fassadenelementen mit hoher Dämmwirkung für den Fassadenbau bei Hochhäusern, mit den folgenden Merkmalen:
a) ein Fassadenelement weist eine Dämmung mit einer 3 - stufigen Schichtung aus einer äußeren Dämmplatte (5) aus hydrophober Kieselsäure und einer inneren Dämmplatte (7) aus hydrophober Kieselsäure auf, wobei zwischen diesen Platten (5,7) eine Vakuum
- Isolierplatte (6) gelagert ist, die aus Kieselsäure besteht, die luftdicht mit Folie umhüllt und evakuiert wurde,
b) ein Fassadenelement weist mindestens eine äußere Deckplatte (2) und mindestens eine innere Deckplatte (8) auf,
c) ein Fassadenelement weist eine Mehrzahl von, am Umfang des Fassadenelements verteilten, Klemmelementen (4) auf, die dem Zusammenhalt der äußeren Deckplatte (2) und der inneren Deckplatte (8) mit der 3 - stufigen Schichtung der Dämmplatten (5,6,7) dienen, wobei eine feuerfeste Dichtleiste (18) den gesamten Umfang der Vakuum - Isolierplatte (6) umschließt,
d) einem Distanz - und Halteelement (14) zur Aufnahme eines Fassadenelements in Verbindung mit bestehenden Fassadensystemen.

2. Fassadensystem nach Anspruch 1, **dadurch gekennzeichnet, dass** die Distanz - und Halteelemente (14) an den Ecken mittels jeweils eines rechtwinkeligen Eckverbinders (11) verbunden sind.

3. Fassadensystem nach einem der vorgehenden Ansprüche, **dadurch gekennzeichnet, dass** zur Fixierung der äußeren Deckplatte (2) Verschiebekeile (22) und zur Versiegelung der inneren Deckplatte (8) eine Versiegelungsleiste (16) vorgesehen ist.

4. Fassadensystem nach einem der vorgehenden Ansprüche, **dadurch gekennzeichnet, dass** im bestehenden Rahmensystem (12) vorhandene Hohlräume mit hydrophober Kieselsäure verfüllt werden.

5. Verfahren zur Schaffung eines Fassadensystems mit feuerbeständigen Fassadenelementen mit hoher Dämmwirkung für den Fassadenbau bei Hochhäusern, mit den folgenden Merkmalen:
a) ein bestehendes, oder neu zu erstellendes, Fassadensystem wird zur Aufnahme eines verbesserten Fassadensystems vorbereitet, indem ein Distanz - und Halteelement (14) zur Aufnahme eines Fassadenelements in Verbindung mit den bestehenden Fassadensystemen installiert wird,
b) es wird ein Fassadenelement geschaffen mit einer Dämmung bestehend aus einer 3 - stufigen Schichtung aus einer äußeren Dämmplatte (5) aus hydrophober Kieselsäure und einer inneren Dämmplatte (7) aus hydrophober Kieselsäure, wobei zwischen diesen Platten (5,7) eine Vakuum - Isolierplatte (6) gelagert ist, die aus Kieselsäure besteht, die luftdicht mit Folie umhüllt und evakuiert wurde, und wobei ein Fassadenelement mindestens eine äußere Deckplatte (2) und mindestens eine innere Deckplatte (6) aufweist, und wobei
c) ein Fassadenelement eine Mehrzahl von, am Umfang des Fassadenelements verteilten, Klemmelementen (4) aufweist, die dem Zusammenhalt der äußeren Deckplatte (2) und der inneren Deckplatte (8) mit der 3 - stufigen Schichtung der Dämmplatten (5,6,7) dienen, wobei eine feuerfeste Dichtleiste (18) den gesamten Umfang der Vakuum - Isolierplatte (6) umschließt.

6. Verfahren nach Anspruch 5, **dadurch gekennzeichnet,**
**dass** die Distanz - und Halteelemente (14) an den Ecken mittels jeweils eines rechtwinkeligen Eckverbinders (11) verbunden werden.

7. Verfahren nach einem der Ansprüche 5 bis 6, **dadurch gekennzeichnet, dass** zur Fixierung der äußeren Deckplatte (2) Verschiebekeile (22) und zur Versiegelung der inneren Deckplatte (8) eine Versiegelungsleiste (16) vorgesehen wird.

8. Verfahren nach einem der Ansprüche 5 bis 7, **dadurch gekennzeichnet,**
**dass** im bestehenden Rahmensystem (12) vorhandene Hohlräume mit hydrophober Kieselsäure verfüllt werden.

## Claims

1. Façade system having fire-resistant façade elements having a high insulating effect for façade construction in high-rise buildings, comprising the following features:
a) a façade element has an insulation comprising a 3-stage layer structure made up of an outer insulating panel (5) of hydrophobic silica and an inner insulating panel (7) of hydrophobic silica, wherein a vacuum insulation panel (6) which consists of silica which has been encased airtight with film and evacuated is mounted between said panels (5, 7),
b) a façade element has at least one outer cover panel (2) and at least one inner cover panel (8),
c) a façade element has a plurality of clamping elements (4) which are distributed on the periphery of the façade element and which serve to hold the outer cover panel (2) and the inner cover panel (8) together with the 3-stage layer structure of the insulating panels (5, 6, 7), wherein a fireproof ceiling strip (18) encloses the entire periphery of the vacuum insulation panel (6),
d) a spacing and retaining element (14) for receiving a façade element in conjunction with existing façade systems.

2. Façade system according to Claim 1, **characterized in that** the spacing and retaining elements (14) are connected at the corners by means of a respective right-angled corner connector (11).

3. Façade system according to one of the preceding claims, **characterized in that** displacement wedges (22) are provided for fixing the outer cover panel (2) and a sealing strip (16) is provided for sealing the inner cover panel (8).

4. Façade system according to one of the preceding claims, **characterized in that** cavities present in the existing frame system (12) are filled with hydrophobic silica.

5. Method for creating a façade system having fire-resistant façade elements having a high insulating effect for façade construction in high-rise buildings, comprising the following features:
a) an existing façade system or a façade system to be produced from new is prepared for receiving an improved façade system by installing a spacing and retaining element (14) for receiving a façade element in conjunction with the existing façade systems,
b) a façade element is created with an insulation comprising a 3-stage layer structure made up of an outer insulating panel (5) of hydrophobic silica and an inner insulating panel (7) of hydrophobic silica, wherein a vacuum insulation panel (6) which consists of silica which has been encased airtight with film and evacuated is mounted between said panels (5, 7), and wherein a façade element has at least one outer cover panel (2) and at least one inner cover panel (6), and wherein
c) a façade element has a plurality of clamping elements (4) which are distributed on the periphery of the façade element and which serve to hold the outer cover panel (2) and the inner cover panel (8) together with the 3-stage layer structure of the insulating panels (5, 6, 7), wherein a fireproof sealing strip (18) encloses the entire periphery of the vacuum insulation panel (6).

6. Method according to Claim 5, **characterized in that** the spacing and retaining elements (14) are connected at the corners by means of a respective right-angled corner connector (11).

7. Method according to either of Claims 5 and 6, **characterized in that** displacement wedges (22) are provided for fixing the outer cover panel (2) and a sealing strip (16) is provided for sealing the inner cover panel (8).

8. Method according to one of Claims 5 to 7, **characterized in that** cavities present in the existing frame system (12) are filled with hydrophobic silica.

## Revendications

1. Système de façade avec des éléments de façade résistant au feu avec un effet d'isolation élevé pour la construction de façades dans des immeubles de grande hauteur, comprenant les caractéristiques suivantes :
a) un élément de façade présente une isolation avec une stratification à trois couches constituée d'une plaque d'isolation extérieure (5) en acide silique hydrophobe et d'une plaque d'isolation intérieure (7) en acide silique hydrophobe, une plaque d'isolation sous vide (6) étant supportée entre ces plaques (5, 7), laquelle se compose d'acide silique, et est enveloppée de manière étanche à l'air avec un film et a été mise sous vide,
b) un élément de façade présente au moins une plaque de recouvrement extérieure (2), et au moins une plaque de recouvrement intérieure (8),
c) un élément de façade présente une pluralité d'éléments de serrage (4) répartis sur la périphérie de l'élément de façade, qui servent à maintenir ensemble la plaque de recouvrement extérieure (2) et la plaque de recouvrement intérieure (8) avec la stratification à trois couches des plaques d'isolation (5, 6, 7), une baguette d'étanchéité ignifuge (18) entourant toute la périphérie de la plaque d'isolation sous vide (6),
d) un élément d'espacement et de retenue (14) pour recevoir un élément de façade en liaison avec des systèmes de façade existants.

2. Système de façade selon la revendication 1, **caractérisé en ce que** les éléments d'espacement et de retenue (14) sont raccordés au niveau des coins à chaque fois au moyen d'une équerre d'assemblage (11).

3. Système de façade selon l'une quelconque des revendications précédentes, **caractérisé en ce que** pour la fixation de la plaque de recouvrement extérieure (2) des cales mobiles (22) sont prévues, et pour le scellement de la plaque de recouvrement intérieure (8), une baguette de scellement (16) est prévue.

4. Système de façade selon l'une quelconque des revendications précédentes, **caractérisé en ce que** des cavités présentes dans le système de cadre existant (12) sont remplies d'acide silique hydrophobe.

5. Procédé pour créer un système de façade avec des éléments de façade résistant au feu ayant un effet d'isolation élevé pour la construction de façades dans des immeubles de grande hauteur, comprenant les caractéristiques suivantes :
a) un système de façade existant ou devant être nouvellement construit est préparé pour recevoir un système de façade amélioré en installant un élément d'espacement et de retenue (14) pour recevoir un élément de façade en liaison avec le système de façade existant,
b) un élément de façade est créé avec une isolation constituée d'une stratification à trois couches constituée d'une plaque d'isolation extérieure (5) en acide silique hydrophobe et d'une plaque d'isolation intérieure (7) en acide silique hydrophobe, entre ces plaques (5, 7) étant supportée une plaque d'isolation sous vide (6) qui se compose d'acide silique et qui est enveloppée de manière étanche à l'air avec un film et qui a été mise sous vide, et un élément de façade présentant au moins une plaque de recouvrement extérieure (2) et au moins une plaque de recouvrement intérieure (6), et
c) un élément de façade présente une pluralité d'éléments de serrage (4) répartis sur la périphérie de l'élément de façade, lesquels servent à maintenir ensemble la plaque de recouvrement extérieure (2) et la plaque de recouvrement intérieure (8) avec la stratification à trois couches des plaques d'isolation (5, 6, 7), une baguette d'étanchéité ignifuge (18) entourant toute la périphérie de la plaque d'isolation sous vide (6).

6. Procédé selon la revendication 5, **caractérisé en ce que** les éléments d'espacement et de retenue (14) sont raccordés au niveau des coins à chaque fois au moyen d'une équerre d'assemblage (11).

7. Procédé selon l'une quelconque des revendications 5 à 6, **caractérisé en ce que** pour la fixation de la plaque de recouvrement extérieure (2), on prévoit des cales mobiles (22) et pour le scellement de la plaque de recouvrement intérieure (8), on prévoit une baguette de scellement (16).

8. Procédé selon l'une quelconque des revendications 5 à 7, **caractérisé en ce que** des cavités prévues dans le système de cadre existant (12) sont remplies d'acide silique hydrophobe.
